# EUROPEAN PATENT SPECIFICATION

(11) **EP 4 765 716 B1**
(45) Date of publication and mention of the grant of the patent: **18.11.2026**
(21) Application number: 24383397.7
(22) Date of filing: 18.12.2024
(51) Int. Cl.: H04L 9/00, H04L 9/08

(54) **APPARATUSES AND METHODS OF GENERATING, SENDING, RELAYING AND RECEIVING A SECRET KEY**
VORRICHTUNGEN UND VERFAHREN ZUM ERZEUGEN, SENDEN, WEITERLEITEN UND EMPFANGEN EINES GEHEIMSCHLÜSSELS
APPAREILS ET PROCÉDÉS DE GÉNÉRATION, D'ENVOI, DE RELAIS ET DE RÉCEPTION D'UNE CLÉ SECRÈTE

(43) Date of publication of application: 24.06.2026
(73) Proprietor: Fundación Tecnalia Research & Innovation, 20009 Donastia-San Sebastían Gipuzkoa (ES); Universidad del Pais Vasco - Euskal Herriko Unibertsitatea (UPV/EHU), 48940 BIZKAIA Leioa (ES)
(72) Inventor: BRAZAOLA VICARIO, Aitor, 20009 Donostia-San Sebastián (ES); LAGE SERRANO, Oscar, 20009 Donostia-San Sebastián (ES); BERNABÉ RODRÍGUEZ, Julen, 20009 Donostia-San Sebastián (ES); JACOB TAQUET, Eduardo Juan, 48940 Leioa (ES)
(74) Representative: Balder IP Law, S.L.

(56) References cited:
- CN-A- 113 067 698
- LI ZHEN-ZHEN ET AL: "Secure quantum network coding based on quantum homomorphic message authentication", QUANTUM INFORMATION PROCESSING, SPRINGER US, NEW YORK, vol. 18, no. 1, 23 November 2018 (2018-11-23), pages 1 - 21, XP036679695, ISSN: 1570-0755, [retrieved on 20181123], DOI: 10.1007/S11128-018-2127-Z

## Description

### TECHNICAL FIELD

The present invention relates to quantum key distribution networks and the key relaying functionality between different quantum communication links. More specifically, the present invention relates to apparatuses and methods of generating, sending, relaying and receiving a secret key.

### STATE OF THE ART

Quantum key distribution (QKD) is a secret or cryptographic key exchange mechanism based on the laws of quantum physics that protects the confidentiality of a transmission channel between an emitter and a receiver. QKD enables two parties to produce a shared random secret key known only to them, which then can be used to encrypt and decrypt messages. The secret key can then be used with any chosen encryption algorithm to encrypt a message, which can be transmitted over a standard communication channel. At its destination, the message can be decrypted only if the key with which the message has been encrypted is known.

In QKD the emitter and the receiver are connected by a quantum link which allows quantum states to be transmitted. In addition, they also communicate via a public classical channel. The security of the QKD protocol comes from encoding the secret key to be shared in non-orthogonal states. These states cannot in general be measured without disturbing the original state. This is called quantum indeterminacy.

The secret keys are usually generated with a quantum random number generator as a classical bit string and are then encoded into quantum states based on the polarization of photons.

In the QKD process, the transmitter uses a coherent light source, such as laser pulses attenuated to near photon level, and an optical channel (also referred to as quantum communication link), such as optical fiber or the atmosphere, for the transmission of the key to a receiver. The receiver, on the other hand, is responsible for obtaining the initial bit values by measuring the light pulses on the polarization basis with which they were encoded. As the receiver does not know this information (the polarization basis), it performs the measurements randomly on mutually agreed possible bases. Once the measurements have been made, both parties (emitter and receiver) share via the classical channel the basis on which they have produced or measured each light pulse and discard those on which they do not coincide. The remaining bits are considered the secret key. Every so often emitter and receiver reveal through the classical channel a few bits for comparison to verify that the communication is still secure. If a third party has gained any information about the photons' polarization, this introduces errors in the receiver's measurements.

In view of that, the keys that are generated and transmitted using QKD are considered in terms of information theory to be unconditionally secure, meaning that each key has a practically perfect level of entropy that makes them impossible to predict regardless of the computational power of an attacker. As previously explained, this is possible thanks to the uncertainty principle and the state non-cloning theorem, which, among other things, prevent an eavesdropper from intercepting the communication without irreversibly altering the message, in this case the secret key.

Among the various challenges that QKD presents for mass adoption is the scalability of the solution. Most QKD systems guarantee a secure key exchange between two locations, i.e. a point-to-point link over optical fiber. In addition, such deployments are limited by the distance limitations of current optical technology. Due to the special sensitivity of the quantum link to the imperfections of the medium, nowadays it is practically impossible to make direct links between emitter and receiver that exceed 100 km in distance.

The use of the QKD methodology in classical metropolitan telecommunications networks has been extended in the EU project Secure Communication based on Quantum Cryptography (SECOQC), by interconnecting seven quantum links via optical fiber with devices of different technologies and manufacturers.

The SECOQC used pairs of quantum key distribution modules (QKDM) (an emitter QKDM and a receiver QKDM) defining a quantum link per pair of QKDMs. At each receiver QKDM, in case not being directly connected to the emitter, the secret key is unveiled, encrypted again, and sent towards the next QKDM, being said unveiling its weak point. These steps are performed until the key reaches the final QKDM connected to a receiver as a way of extending the service coverage and making the network compatible with devices of different vendors.

Furthermore, regarding this methodology of extending the network, a trusted node, also known as a trusted relay, is a controlled location by a trusted entity considered physically and logically secure by all members of a network where QKDM of different quantum communication links are located, so they can exchange keys in a secure way. This combination of QKDMs and trusted relays acts as a key relay between independent quantum links, allowing the extension of the coverage of the QKD service beyond the distance limitations of the physical medium of the quantum links and it is also a way to enable meshed networks.

Currently, the mechanism for forwarding keys between quantum links via QKDMs in trusted relays implies returning received keys to their clear state to be encrypted again. This operation, where the key to be transported is exposed in the QKDM and thus is accessible to the personnel with administrative access to it, implies that all members of the network must be confident that these QKDM are sufficiently protected against internal or external threats.

Until the technology is developed to create a quantum repeater that can keep the quantum properties of photons unchanged through their passage by entanglement or other techniques, the security of QKD networks depends on the reliability of the intermediate elements that act as classical zones between different links. At the moment, these elements (the QKDMs) represent the weakest link in the security of these networks. Therefore, reducing the necessary confidence in the elements that make up the network is a major step in one of the most relevant challenges in the deployment of this technology.

Recommendation "ITU-T. (2019). Y.3800: Quantum key distribution networks. In Y Series: Global information infrastructure, Internet protocol aspects, next-generation networks, Internet of Things and smart cities. International Telecommunication Union" defines the conceptual structure of quantum key distribution networks (QKDNs).

Recommendation «ITU-T Y.3803 (2020) Amd. 1 (11/2023). Quantum key distribution networks. Series Y: Global information infrastructure, Internet protocol aspects, next-generation networks, Internet of Things and smart cities. International Telecommunication Union" is part of the Y-series recommendations focusing on global information infrastructure, Internet protocol aspects, next-generation networks, Internet of Things, and smart cities. This specific recommendation deals with quantum key distribution networks. Chinese Patent Application CN 113067698 A discloses an end-to-end key generation method based on queue polling in a quantum metropolitan area network.

The article "Secure quantum network coding based on quantum homomorphic message authentication" by Li et al, in Quantum Information Processing (2019) 18:14, discloses a homomorphic message authentication mechanism being applied to a quantum key distribution scheme.

### DESCRIPTION OF THE INVENTION

The present invention aims to overcome the above-mentioned drawbacks, allowing sending a key, such as a secret key used to encrypt and decrypt a message, between a sender and a receiver, in a secure way. In particular, the present invention is applicable to QKD networks comprising two or more quantum communication links, thus allowing a key to be sent over long distances in a secure way.

A QKD network comprises pairs of quantum key distribution modules (QKDM) connected through a quantum link. A QKDM (also referred to as quantum device) is a hardware appliance equipped with optical components required to produce random strings with a perfect level of entropy and capable of encoding that content into quantum states of a photon source such as weak coherent laser pulses. As QKDMs can be emitters or receivers, depending on their role, the optical components can differ according to its technical needs. A quantum link is a communication channel for transmitting quantum signals. The QKDMs are also connected via a classical channel, which is a communication channel that is used by two communicating parties for exchanging data encoded in a form that may be non-destructively read and fully reproduced. Each of the quantum links starts and ends at a QKDM. Each QKDM associated with one end of a quantum link is connected through a key management system (KMS) to a second QKDM associated with another quantum link. Associated to each QKDM there is one or more KMS protected against intrusion and attacks by unauthorized parties. A KMS is a functional element to manage keys involved in QKDMs and to communicate with other KMSs of the QKD network.

Between pairs of QKDMs connected by a quantum link there is secure communication of the key. However, as explained in the prior art, the geographical range of each quantum link is limited. In order for a key that has traveled securely over a link between two QKDMs to reach (continue hopping) its destination, it is necessary to use additional quantum links between other pairs of QKDMs. The key is passed from the sender QKDM to the receiver QKDM, and this communication is critical since it forces, in the state of the art, to set clear the received key.

To prevent access to this exposed key, a trusted relay is conventionally established. A trusted relay is the point where different devices and links meet during the exchange of a key. In the present case, a trusted relay comprises two QKDMs belonging to different links (more generally, it could comprise more than two QKDMs belonging to different links) together with the at least one KMS that acts as the interface between the two QKDMs, which may even be from different manufacturers. The trusted relays are considered secure by all members of the network. However, the trusted relays can be challenged, as they are not exempt from cyber-attacks even if the trusted relay has been protected by classical security techniques.

The present invention proposes a solution to this problem, by making the exchange of keys between KMSs integrated or connected to QKDMs of different quantum links completely private despite the inherent vulnerability of the trusted relays.

In view of the above, apparatuses and methods of generating, sending, relaying and/or receiving a key in a secure way are proposed. A key generated in a source KMS associated to a secure application entity SAE (the sender) can be used to encrypt a message to be addressed by the sender to another SAE (the receiver). The key can be sent in a secure way to a destination KMS associated to the receiver. This way, the receiver, once the destination KMS has received the key, can use it to decrypt the message. With the methods of the present invention, this key is sent securely to the receiver and the key can be used to decrypt the encrypted message sent by the sender.

Thus, the invention enables relaxing the trust assumptions on the conventional trusted relays among QKD quantum links to keep the forwarded secret key completely private, even against the physical systems that support the operation, such as the KMSs, since the KMSs are implemented on devices that are not free of vulnerabilities.

A SAE particularly refers to a software application used by a user who wants to share some data (for example, to send a message, such as an email) with another user who uses another SAE. In the context of the present invention, a sending SAE needs to encrypt the data to be sent so that it is shared securely with a receiving SAE. The SAEs are, in this context, the end users of the QKD service. Particularly, a SAE represents or is comprised in a device (e.g. computer) running an application that needs to send a password that the application has used or is going to use to encrypt information (e.g. a message, such as an email) to be sent over a communication channel (e.g. the Internet). This password needs to be kept secret over the whole end-to-end link.

Furthermore, a trusted relay together with the SAE or SAEs connected to it, forms a secure zone. A secure zone is a network, such as a LAN, where the consumers of a service, the SAEs in this case, are located together with their corresponding trusted relay.

In embodiments of the invention, the KMSs can be physically integrated in the QKDMs. For example, a KMS can be a functional element embedded as a piece of software in one or more QKDMs. In other embodiments of the invention, the KMSs are not physically integrated in the QKDMs. For example, a KMS can be a functional element embedded as a piece of software in processing means different from the processing means of an associated QKDM. Anyhow, the KMSs are also the point of contact with the SAEs, that is, the KMS receive the request to generate a key and provides the decrypted key to the corresponding destination SAE. In an embodiment of the invention, in which the KMSs are not physically embedded in the QKDMs, there is one KMS for each trusted relay, no matter how many QKDMs there are in the trusted relay. For example, a trusted relay may comprise two QKDMs, each one connected to a different quantum link, and a single KMS associated to both QKDMs. This would be a simple embodiment of the invention, but the network can be multiplied and a single KMS can be connected to more than two QKDMs, each with a corresponding quantum link.

The apparatuses, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, and the like, as well as output devices, such as a display, depending on the implementation of the hardware.

In embodiments in which the KMSs are comprised in hardware different from the QKDMs, the KMSs may be comprised in a processor of a device. The processor may include one of: a central processing unit or at least one core thereof, a graphics processing unit, a field-programmable integrated circuit such as an FPGA (i.e. field-programmable gate array) or an embedded circuit (e.g. a system-on-chip, a multiprocessor system-on-chip), and a combination thereof. The device may be a personal computer, a computer system, a laptop or any other computing device suitable to host a processor. The device further includes a data storage device including at least a non-volatile memory, such as a hard disk drive (HDD) or preferably a solid-state drive (SSD), and optionally a volatile memory.

A KMS receives a first quantum key from a first QKDM and a second quantum key from a second QKDM to which this KMS is connected and uses both quantum keys to generate with them a secure, inviolable key, which will be sent to the destination, which is a KMS to which the destination SAE is connected.

In addition, each KMS has a certificate with two keys, one public and one private, and all the KMSs of the network (QKD network) know the public key of the rest of the KMSs in the network.

Furthermore, associated with each KMS there may be a means for generating a secret key, in the event that a source SAE associated with that KMS needs a key to encrypt a message or communication.

A first aspect of the invention is a method of generating and sending a secret key, the method comprising:
receiving, at a source key management system (KMS), from a source secure application entity (SAE), a request to share a secret key with a destination SAE;
finding, by the source KMS, a route to communicate with a destination KMS to which the destination SAE is connected and identifying a next KMS in the route;
generating a secret key, the secret key being the key that the source SAE requests to share with the destination SAE;
receiving by the source KMS a quantum key from a source QKDM, wherein the secret key and the quantum key are of a same length;
homomorphically encrypting the secret key with a homomorphic public key of the destination KMS to which the destination SAE is connected, obtaining a homomorphically encrypted secret key;
homomorphically encrypting the quantum key with the homomorphic public key of the destination KMS to which the destination SAE is connected, obtaining a homomorphically encrypted quantum key;
homomorphically operating the homomorphically encrypted secret key with the homomorphically encrypted quantum key, obtaining a homomorphic key;
sending the homomorphic key to the next KMS in the route.

In this context, a secret key refers to a key to be sent between a source SAE and a destination SAE so that a message sent by the source SAE and encrypted with this key, can subsequently be decrypted by the destination SAE.

As previously explained, the KMS is a module that executes one or more of secure key storage, provisioning, routing and key lifecycle management. Particularly, in this aspect of the invention it can be seen that the KMS receives the secret key, generated with the QRNG, and encrypts it with the public homomorphic key of the destination KMS. It also receives the quantum key and encrypts it also with the public homomorphic key of the destination KMS. It also performs the homomorphic operation and sends the homomorphic key to the next KMS in the route.

As previously indicated, the SAE is an entity which wishes to transmit a secret key to a destination SAE, which will subsequently use said the secret key to decrypt a message shared between them.

In an embodiment of the invention, the establishment of a route from the source KMS (to which the source SAE is connected) to a KMS to which the destination SAE is connected, is done by checking a routing table. For example, when the source KMS receives a request from the source SAE to share a key with the destination SAE, the source KMS checks, preferably in its routing table, a next hop (next KMS) in the network. A routing table may contain, for each KMS, one or more KMSs with direct connection. A KMS has direct connection with another KMS when one of the KMSs communicates with a source QKDM and the other KMS communicates with the destination QKDM which is peer, through a corresponding quantum link, of the source QKDM. Therefore, a route is the set of KMSs connected to each other which are interconnected so that a secret key can travel from the source SAE to the destination SAE.

The secret key is used to encrypt a message to be sent from the source SAE to the destination SAE. The message can be sent via a conventional communications network, such as the Internet or a WAN. When the destination SAE receives the encrypted message, it cannot decrypt it if the destination SAE does not have the corresponding key. Therefore, the source SAE must transmit the secret key to the destination SAE.

The quantum key is a key that the source QKDM provides to its associated KMS, in this case the source KMS. The quantum key is a key sent by the source QKDM via its quantum link to its peer QKDM. The quantum key receives its name because the quantum links enable quantum states to be transmitted, as explained in the prior art section. The source QKDM encodes the key to be shared in non-orthogonal states. The receiver, in this case the next QKDM, is responsible for obtaining the initial bit values by measuring the light pulses on the polarization basis with which they were encoded. Once the measurements have been made, both QKDMs share via a classical link the basis on which they have produced or measured each light pulse and discard those on which they do not coincide. The remaining bits are considered the key, which corresponds with the quantum key in this case.

The secret key and the quantum key being of the same length means that they contain the same number of bits.

Homomorphic encryption is a form of encryption that allows computations to be performed on encrypted data without first having to decrypt it. The resulting computations, when decrypted, produce an output identical to that which would have been obtained by performing the operations on unencrypted data.

Operating homomorphically is a mathematical function that preserves the structure between two algebraic sets when applied to elements of those sets. In the context of encryption, a homomorphic operation allows computations to be performed on encrypted data without previously decrypting it.

This way of working preserves the privacy of the initial secret key in the process of being decrypted with the previous quantum key before encrypting it again with the next. In case of having an eavesdropper controlling the KMS where this re-encryption operation happens, after the decryption operation the secret key is still unveiled because it is in its homomorphic ciphertext form. Only the owner of the secret key linked to the public key used to homomorphically encrypt the secret key is able to, after undoing the last encryption operation and having the possession of the quantum key with which have been operated, to decrypt it to its clear state form.

Homomorphic encryption relies on existing cryptographic schemas to protect the confidentiality of the encrypted data. There are different categories of homomorphic encryption depending on the types and number of arithmetical operations needed to perform. Fully Homomorphic Encryption (FHE) differs from Partially Homomorphic Encryption (PHE) and Somewhat Homomorphic Encryption (SHE) in its ability to perform an unlimited number of both addition and multiplication operations on ciphertexts. While PHE supports only a single operation (either addition or multiplication) and SHE is limited to a restricted number of operations due to noise growth, FHE employs techniques like bootstrapping to refresh ciphertexts and support complex computations without constraints.

The resultant ciphertext of a homomorphic encryption is usually larger than the equivalent with other classical algorithms, this presents the technical challenge of having to manage a piece of information larger than the original in clear text. This is because the amount of noise induced to leave space to perform operations over the encrypted content.

An homomorphically operated ciphertext can only be operated with another ciphertext using the same crypto-context parameters used in the encryption process. This means that, the entity that encrypts the data with the public key of the receiver can share publicly the parameters set in its process to let others operate with the ciphertext.

Homomorphic encryption relies on existing cryptographic techniques to protect data confidentiality. Some homomorphic encryption cryptosystems are built on public key cryptography algorithms that are considered until today quantum safe, like Brakerski-Fan-Vercauteren (BFV) which is built upon the family of mathematical problems named Learning-With-Errors (LWE). This kind of problem is considered secure against quantum attacks because, until today, there is not a quantum algorithm able to reverse the operation providing a significant advantage compared with classical computers.

A homomorphic key is therefore a key which is constructed by homomorphically operating the secret key and the quantum key, wherein the secret key and the quantum key have been homomorphically encrypted respectively with the public homomorphic key of the destination KMS, to which the destination SAE is connected. The public homomorphic key must be known by the source KMS.

The next KMS to which the homomorphic key is sent to is an intermediate KMS necessary to reach the destination KMS, to which the destination SAE is connected.

In the method described, the key generated in the QRNG associated to the source KMS, the secret key, is encrypted with the homomorphic public key of the destination KMS connected to the destination SAE and the result is encrypted again with a homomorphic operation with the second key. Then, the resulting key, the homomorphic key, is sent over to the next KMS in the route.

The usage of homomorphic encryption protects the original secret key from potentially compromised trusted relays. In other words, the secret key is protected from vulnerabilities in the so-called trusted relay. When the source KMS receives a request from the source SAE to produce and relay a secret key, the secret key is encrypted with the homomorphic public key of the destination KMS. This encryption prepares the original secret key to be operated homomorphically with the quantum key of the associated QKDM used in its corresponding quantum link and, at the same time, protects the secret key from being disclosed by any intermediate KMS.

In an embodiment of the invention, the source KMS is connected to the source SAE via LAN, the protocol to exchange messages could be over HTTPs following ETSI 014, ETSI 004 specifications or any other communication protocol, the mentioned are specifications for communication protocol between a client, in this case the source SAE, and a KMS, in this case the source KMS, to retrieve secret keys exchanged using a QKD protocol.

In an embodiment of the invention, the source KMS is connected to the source QKDM via a LAN.

In an embodiment of the invention, the source KMS is connected to the next KMS in the route through a WAN allowing to send the homomorphic key to the next KMS in the route.

In an embodiment of the invention the destination KMS comprises a public homomorphic key and in an embodiment of the invention, the destination KMS further comprises a private homomorphic key.

A public key is an encryption key that can be freely shared and distributed. It is used to encrypt messages or verify digital signatures. Anyone can use a public key to send an encrypted message to the owner of the corresponding private key. A private key is a secret encryption key that must be kept confidential by its owner. It is used to decrypt messages that were encrypted with a corresponding public key or to create digital signatures. Only the owner of the private key can decrypt messages or create valid signatures.

In an embodiment of the invention, the secret key is generated with a quantum random number generator associated to the source KMS.

Quantum random number generators (QRNGs) are a special case of TRNG (True Random Number Generators), that generate randomness by measuring quantum processes, which are, by nature, non-deterministic. Using a QRNG to generate the secret key to be transmitted guarantees generation of numbers that are fundamentally unpredictable and non-deterministic enhancing the security of the communication.

In an embodiment of the invention, the QRNG used to generate the secret key is a QRNG associated or belonging to the QKDM. Each QKDM comprises a QRNG to generate keys to be sent to its peer QKDM.

In an embodiment of the invention, the QRNG is not a QRNG associated to the QKDM, but a different QRNG, associated with the KMS from which the generated secret key can be sent.

An advantage of delegating the generation of the original secret key to an additional QRNG different from the one of the QKDM is avoiding using the QRNG integrated in the QKDM. This gives the QKDM administrators the option to replace the KMS integrated in the QKDM with another in case a hardware vulnerability is detected in the process of random number generation on a specific device model of a vendor.

In an embodiment of the invention, the source SAE, the source KMS and the source QKDM belong to a same secure zone. In this way, any communications between the source SAE and the source KMS are secure. As previously indicated, this communication may be done via an ETSI 014 specification.

In an embodiment of the invention, the method further comprises providing by the source KMS the secret key to the source SAE. In this way, the source SAE can use said key to encrypt any messages that it wishes to send to the destination SAE.

In an embodiment of the invention, the destination SAE belongs to a destination secure zone different from the source secure zone. In this way, once the destination KMS to which the destination SAE is connected obtains the secret key, it can send it to the destination SAE, so it can use said key to decrypt any encrypted messages that the source SAE may send.

In an embodiment of the invention, the secret key further includes a hash of the homomorphic private key of the source KMS connected to the source SAE. This allows the destination KMS of the route, connected to the destination SAE, to check the key origin source and decrypting the hash with the homomorphic public key counterpart of the source KMS, which is known by the destination KMS.

In an embodiment of the invention the homomorphic operation is selected in order to replicate the results of a binary XOR and binary XNOR through arithmetic operations like additions or subtractions. These homomorphic operations are only some examples that can be used. Other arithmetic operations may be used, for example multiplications or divisions between both keys.

A second aspect of the invention is related to a method of relaying a secret key, wherein the secret key has been originated in a source KMS to which a source SAE is connected, and wherein the secret key is to be transmitted to a destination KMS to which a destination SAE is connected, the method comprising:
receiving by a KMS different from the source KMS and the destination KMS a homomorphic key, wherein the homomorphic key contains a homomorphically encrypted secret key homomorphically encrypted with a homomorphic public key of the destination KMS and a homomorphically encrypted quantum key homomorphically encrypted with the homomorphic public key of the destination KMS, wherein the homomorphically encrypted secret key has been homomorphically encrypted in the source KMS connected to a source SAE who sent the source KMS a request to share a secret key with the destination SAE;
receiving by the KMS a first quantum key from a first QKDM, the first QKDM being a QKDM connected to the source QKDM, or another intermediate QKDM necessary to reach the source KMS to which the source SAE is connected,
receiving by the KMS a second quantum key from a second QKDM, the second QKDM being a QKDM connected to a destination QKDM connected to the destination KMS, or another intermediate QKDM necessary to reach the destination KMS to which the destination SAE is connected,
homomorphically encrypting the first quantum key with a homomorphic public key of the destination KMS to which the destination SAE is connected, obtaining a homomorphically encrypted first quantum key;
homomorphically encrypting the second quantum key with the homomorphic public key of the destination KMS to which the destination SAE is connected, obtaining a homomorphically encrypted second quantum key;
homomorphically operating the received homomorphic key, the homomorphically encrypted first quantum key and the homomorphically encrypted second quantum key, obtaining a new homomorphic key,
sending the new homomorphic key to a next KMS, this next KMS being either the destination KMS connected to the destination SAE, or another intermediate KMS necessary to reach the destination KMS to which the destination SAE is connected.

The same definitions and advantages previously indicated regarding the KMS, the SAE, homomorphic encryption and homomorphic operation can be applied to this aspect of the invention.

Once the KMS different from the source KMS and the destination KMS homomorphically operates the received homomorphic key with the homomorphically encrypted first quantum key it obtains the homomorphically encrypted secret key, thanks to the homomorphic properties previously explained. Then, the KMS homomorphically operates the homomorphically encrypted secret key with the homomorphically encrypted second key, obtaining a new homomorphic key which can be sent to the next KMS. In this way, even though the KMS obtains the homomorphically encrypted secret key it never decrypts it, so it never has direct access to the secret key. This is important because, even when the KMS belongs to a trusted relay within a secure zone, it could still be accessed or broken into. In this way, even if an intruder was able to access the homomorphically encrypted secret key, he would not be able to decrypt it and to use it to decrypt the messages shared between the SAEs.

In an embodiment of the invention, the KMS different from the source KMS and the destination KMS, the first QKDM and the second QKDM belong to a same secure zone. This guarantees that any key shared between them remains private.

In an embodiment of the invention, the steps are repeated until the next KMS is the destination KMS connected to the destination SAE. As the secret key remains encrypted, this communication can still be public.

In an embodiment of the invention, the KMS is connected to the first and second QKDMs via a LAN following a standard message specification such as ETSI 014 or any other.

In an embodiment of the invention, the KMS is connected to the next and previous KMS in the route through a WAN.

A third aspect of the present invention relates to a method of receiving a secret key, the method comprising:
receiving by a destination KMS connected to a destination SAE a homomorphic key, wherein the homomorphic key contains a homomorphically encrypted secret key homomorphically encrypted with a homomorphic public key of the destination KMS and a homomorphically encrypted quantum key homomorphically encrypted with the homomorphic public key of the destination KMS, wherein the homomorphically encrypted secret key has been homomorphically encrypted in a source KMS connected to a source SAE who sent the source KMS a request to share a secret key with the destination SAE;
receiving by the destination KMS a quantum key from a QKDM connected to the destination KMS;
homomorphically encrypting the quantum key with the homomorphic public key of the destination KMS, obtaining a homomorphically encrypted quantum key;
homomorphically operating the homomorphic key and the homomorphically encrypted quantum key, obtaining the homomorphically encrypted secret key; and
decrypting the homomorphically encrypted secret key with a homomorphic private key of the destination KMS, thus obtaining the secret key.

The same definitions and advantages previously indicated regarding the KMS, the SAE, homomorphic encryption and homomorphic operation can be applied to this aspect of the invention.

In the described method, the destination KMS homomorphically operates the homomorphic key and the homomorphically encrypted quantum key, obtaining the homomorphically encrypted secret key. After that, the destination KMS decrypts the homomorphically encrypted secret key with the homomorphic private key of the destination KMS, thus obtaining the secret key.

The use of a public and a private key in the KMS introduces an asymmetric encryption, which uses a pair of mathematically related keys for encryption and decryption: a public key and a private key. The public key can be freely shared and is used to encrypt messages, in this case the secret and quantum keys, while the private key is kept secret and used to decrypt the homomorphically encrypted secret key, by the destination KMS in this case. This type of encryption allows secure communication without the need to exchange secret keys, as anyone can use the recipient's public key to send an encrypted message that only the recipient can decrypt with their private key.

In this way, in the present method although any KMS could be able to encrypt the secret key, only the KMS associated to the destination SAE knows its private key, which is the only key that could be used to decrypt the secret key.

In an embodiment of the invention, the destination KMS, the destination QKDM and the destination SAE belong to the same secure zone.

In an embodiment of the invention, the method further comprises requesting, by the destination SAE the secret key to the destination KMS.

In an embodiment of the invention, the destination KMS is connected to the destination QKDM via a LAN.

In an embodiment of the invention, the destination KMS is connected to the previous KMS in the route through a WAN.

In an embodiment of the invention, the destination SAE is connected to the destination KMS via a LAN.

In an embodiment of the invention, at least the source KMS and the destination KMS, the ones associated with the SAEs within the same network, possess homomorphic key certificates comprising public and private keys. In an embodiment of the invention, each KMS holds the public keys of all other KMSs. The sharing method used for this purpose is out of the scope of the invention. All KMS can trace a route to any SAE physically connected to any KMS in the network. The routing method used for this purpose is out of the scope of the invention.

A fourth aspect of the present invention relates to a method of exchanging a secret key, the method comprising:
sending a homomorphic key which contains a homomorphically encrypted secret key by applying the method of generating and sending a secret key as previously described;
receiving the homomorphic key and relaying a new homomorphic key by applying the method previously described;
repeating the relaying step until the homomorphic key arrives at a destination KMS connected to a destination SAE; and
receiving the homomorphic key and obtaining the secret key by applying the method of receiving a secret key, as previously described.

In this way, no matter how many QKDMs there are in the QKD network, the secret key will arrive to the destination KMS who will be able to decrypt is and transmit it to the destination SAE.

In an embodiment of the invention, in case several secret keys are being transmitted, the source KMS can include in the secret key an identification number. This identification number will be sent to the source SAE who, in turn, will also send it to the destination SAE so when it decrypts the secret key, it will know which one it is, in case several have been transmitted.

In an embodiment of the invention, each KMS is associated to its own QRNG. In this way, each KMS can be the one initiating the communication.

In an embodiment of the invention, this method can be replicated to build a complex network in which more than two KMS are in communication with SAEs, so the key can be transmitted from any point of the network.

In an embodiment of the invention, the steps of homomorphically operating the homomorphically encrypted keys described in the four aspects of the invention are performed within a trusted execution environment (TEE).

A Trusted Execution Environment (TEE) is a segregated area of memory and CPU that is protected from the rest of the CPU using encryption, any data in the TEE cannot be read or tampered with by any code outside that environment. This piece of hardware or portion of it, represents a secure enclave within the memory of the computer that runs the operating system that isolates the operations and data from the rest of the system. This, in addition to the homomorphic encryption operations, adds an extra layer of privacy to the methods.

In view of the methods above, in an embodiment of the invention, the trusted zones do not need trustworthiness in any operation phase. Their initial setup can be carried out by any technician who only has to take care of configuring the computer that will become the KMSs and provide access to them. As the homomorphic secret key used to encrypt the original secret key in transport is always going to be public, there is no need to deploy any confidential data on each trusted zone.

A fifth aspect of the present invention is an apparatus for generating and sending a secret key, the apparatus comprising:
means for receiving, from a source secure application entity (SAE), a request to share a key with a destination SAE;
means for finding a route to communicate with a destination apparatus to which the destination SAE is connected and identifying a next apparatus in the route;
means for generating a secret key, the secret key being the key that the source SAE requests to share with the destination SAE;
means for receiving a quantum key from a source QKDM, wherein the secret key and the quantum key are of a same length;
means for homomorphically encrypting the secret key with a homomorphic public key of the destination apparatus to which the destination SAE is connected, obtaining a homomorphically encrypted secret key;
means for homomorphically encrypting the quantum key with the homomorphic public key of the destination apparatus to which the destination SAE is connected, obtaining a homomorphically encrypted quantum key;
means for homomorphically operating the homomorphically encrypted secret key with the homomorphically encrypted quantum key, obtaining a homomorphic key; and
means for sending the homomorphic key to the next apparatus in the route.

A sixth aspect of the invention is an apparatus for relaying a secret key, wherein the secret key has been originated in a source apparatus to which a source SAE is connected, and wherein the secret key is to be transmitted to a destination apparatus to which a destination SAE is connected, the apparatus comprising:
means for receiving a homomorphic key which contains a homomorphically encrypted secret key and a homomorphically encrypted quantum key;
means for receiving a first quantum key from a first QKDM, the first QKDM being a QKDM connected to the source apparatus, or another intermediate QKDM necessary to reach the source apparatus to which the source SAE is connected,
means for receiving a second quantum key from a second QKDM, the second QKDM being a QKDM connected to a destination QKDM connected to the destination apparatus, or another intermediate QKDM necessary to reach the destination apparatus to which the destination SAE is connected,
means for homomorphically encrypting the first quantum key with a homomorphic public key of the destination apparatus to which the destination SAE is connected, obtaining a homomorphically encrypted first quantum key;
means for homomorphically encrypting the second quantum key with the homomorphic public key of the destination apparatus to which the destination SAE is connected, obtaining a homomorphically encrypted second quantum key;
means for homomorphically operating the received homomorphic key, the homomorphically encrypted first quantum key and the homomorphically encrypted second quantum key, obtaining a new homomorphic key,
means for sending the new homomorphic key to a next apparatus, this next apparatus being either the destination apparatus connected to the destination SAE, or another intermediate apparatus necessary to reach the destination apparatus to which the destination SAE is connected.

A seventh aspect of the present invention is an apparatus for receiving a secret key, wherein the secret key has been originated in a source apparatus to which a source SAE is connected, and wherein the apparatus is connected to a destination SAE, the apparatus comprising:
means for receiving a homomorphic key, wherein the homomorphic key contains a homomorphically encrypted secret key homomorphically encrypted with a homomorphic public key of the apparatus and a homomorphically encrypted quantum key homomorphically encrypted with the homomorphic public key of the apparatus, wherein the homomorphically encrypted secret key has been homomorphically encrypted in the source apparatus connected to the source SAE;
means for receiving a quantum key from a QKDM connected to the apparatus;
means for homomorphically encrypting the quantum key with the homomorphic public key of the apparatus, obtaining a homomorphically encrypted quantum key;
means for homomorphically operating the homomorphic key and the homomorphically encrypted quantum key, obtaining the homomorphically encrypted secret key; and
means for decrypting the homomorphically encrypted secret key with a homomorphic private key of the apparatus, thus obtaining the secret key.

In an embodiment of the invention, the apparatus of any aspect of the invention previously described is integrated or embedded in processing means which is not comprised or is not part of a QKDM.

An eighth aspect of the present invention relates to a system for exchanging a secret key, the system comprising:
means for sending a homomorphic key which contains a homomorphically encrypted secret key by applying the method of generating and sending a secret key as previously described;
means for receiving the homomorphic key and relaying a new homomorphic key by applying the method previously described;
means for repeating the relaying step until the homomorphic key arrives at a destination means connected to a destination SAE; and
means for receiving the homomorphic key and obtaining the secret key by applying the method of receiving a secret key, as previously described.

A ninth aspect of the present invention is a computer program product comprising computer program instructions/code for performing the method according to any one of the first aspect, second aspect, third aspect or fourth aspect.

A tenth aspect of the present invention is a computer-readable memory/medium that stores program instructions/code for performing the method according to any one of the first aspect, second aspect, third aspect or fourth aspect.

The proposed apparatuses, methods and systems apply to a number of industries where quantum networks are deployed, including defense, telecommunications, loT and pharmaceutics. The invention may be applied to mix existing networks owned by different countries or institutions without blind trustiness assumptions on how the relaying operation is protected. For example, different countries with their own quantum networks can extend their national coverage with the confidence that the relayed secret keys are protected against eavesdropping in the intermediate QKDMs potentially operated by another country.

### BRIEF DESCRIPTION OF THE DRAWINGS

In order to complete the description and to provide a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic representation of a Quantum Key Distribution network in which different architectural layers are illustrated, and in which the methods of the invention can be implemented according to some embodiments.
Figure 2 shows a schematic representation of a Quantum Key Distribution network in which different architectural layers are illustrated, and in which the methods of the invention can be implemented according to other embodiments.
Figure 3 shows diagrams of the steps performed by the methods according to embodiments of the present invention, for generating, sending, relaying and receiving a key in a Quantum Key Distribution network.
Figure 4 shows diagrams of the steps performed by the methods according to other embodiments of the present invention, for generating, sending, relaying and receiving a key in a Quantum Key Distribution network.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

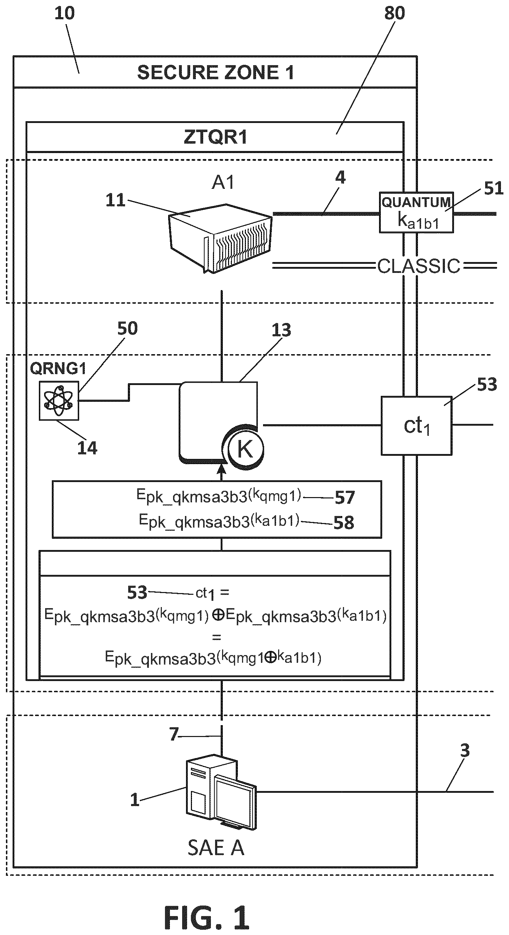

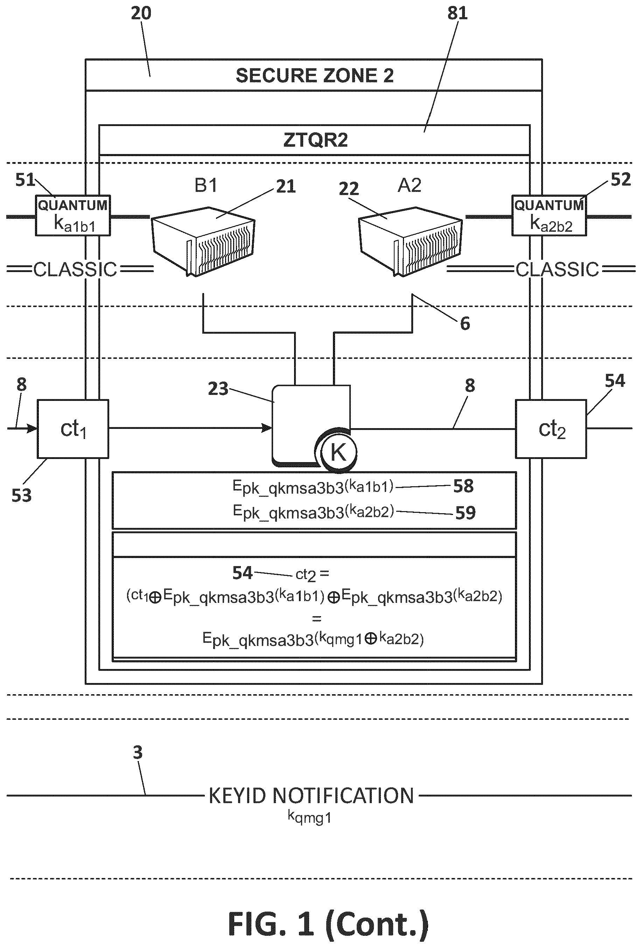

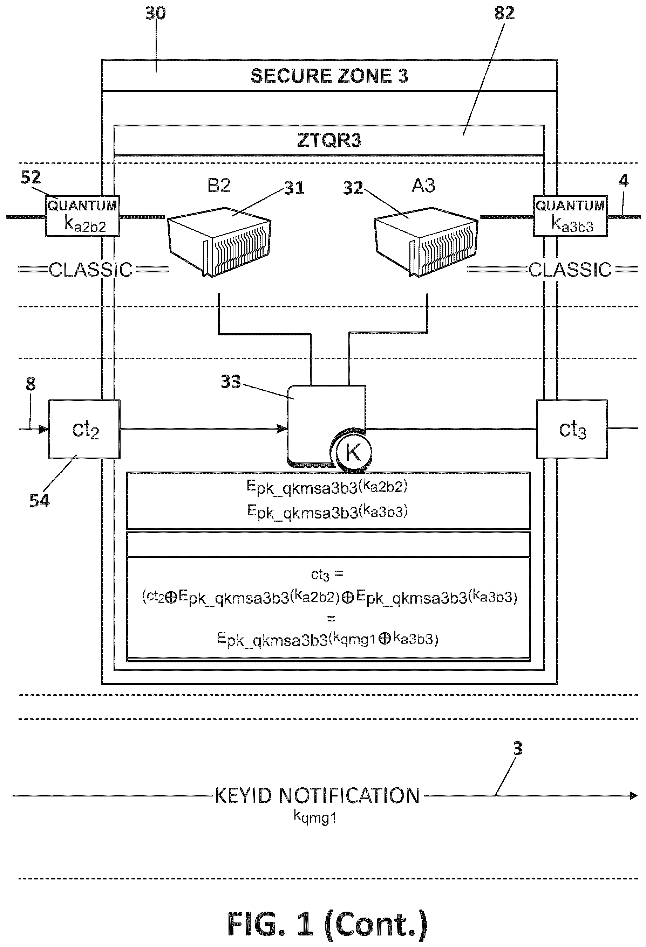

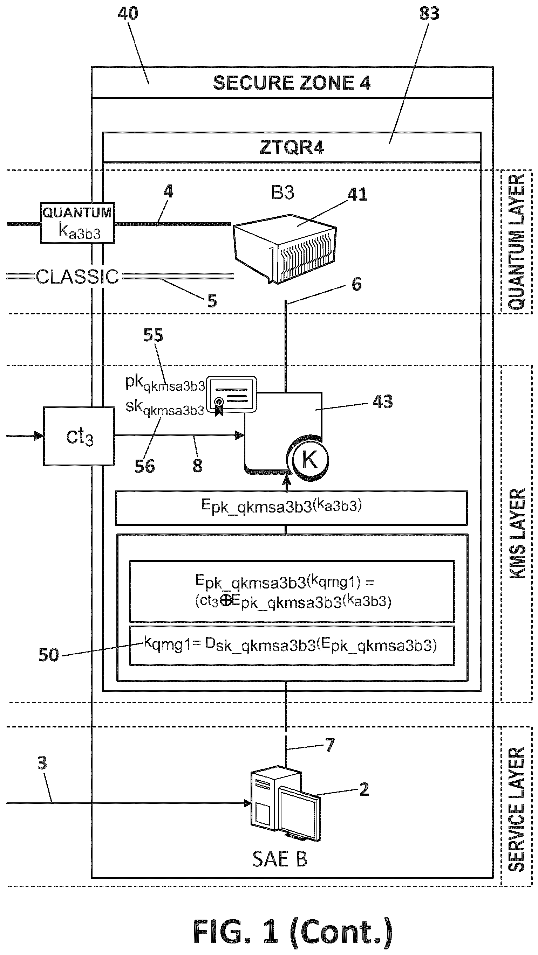

Figure 1 shows the QKD network of the present invention, which comprises a source secure application entity (SAE) 1 and a destination SAE 2. The source SAE 1 wants to send an encrypted message to the destination SAE 2. To do so, the source SAE 1 encrypts a message using a secret key. Then, the secret key will be sent to the destination SAE 2 by a route of key management modules (KMSs) 13-43 so it can then be used to decrypt the message.

To send the secret key, the source SAE 1 asks a source KMS 13 to generate a secret key 50. The secret key 50 will travel through several KMSs 13-43 until it reaches a destination KMS 43, which is connected to the destination SAE 2.

Figure 1 illustrates a possible architecture of the system of the present invention. As can be seen, the QKD network comprises QKDMs 11, 21, 22, 31, 32, 41, and key management modules (KMS) 13, 23, 33, 43, which are connected to the QKDMs 11, 21, 22, 31, 32, 41 through an ETSI 014 specification 6. If the KMS is the source KMS 13, that is, the one connected to the source SAE 1 via a LAN 7, it is only connected to the source QKDM 21. This also applies to the last KMS 43, which is connected to the destination SAE 2 via a LAN using an ETSI 014 specification and that is only connected to the destination QKDM 41. If the KMS is an intermediate one, for example a second KMS 23, it is connected via ETSI 014 specification 6 to the second and the third QKDMs 21, 22.

The KMSs are connected to the previous and/or the next KMS in the route through a WAN 8.

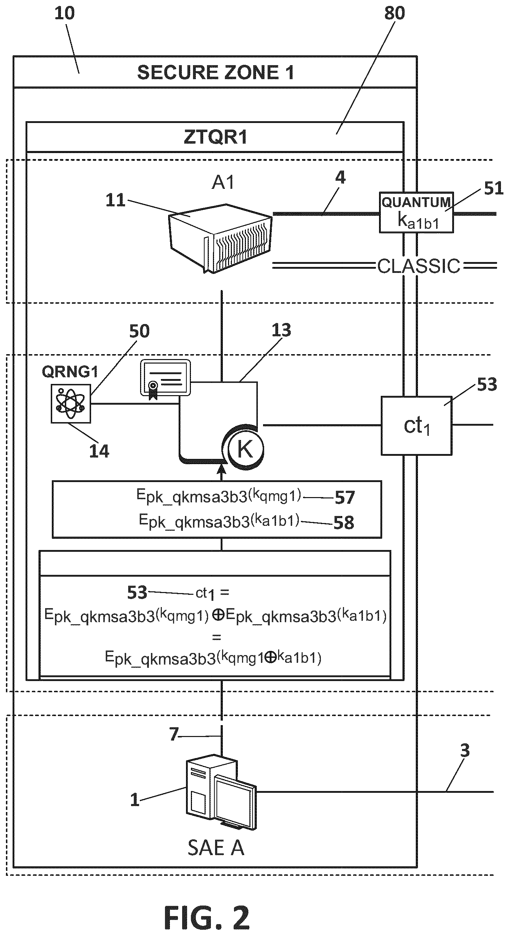

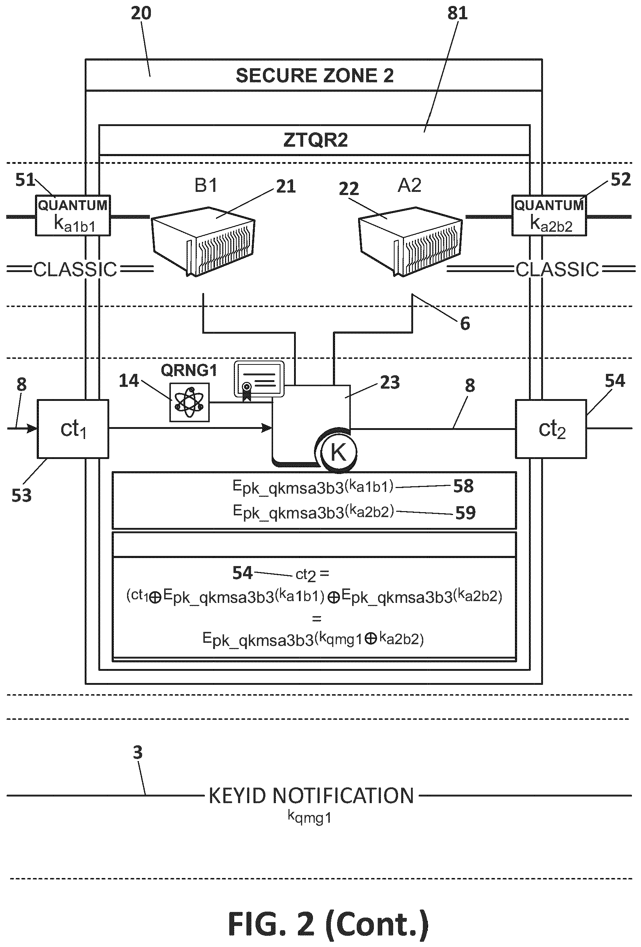

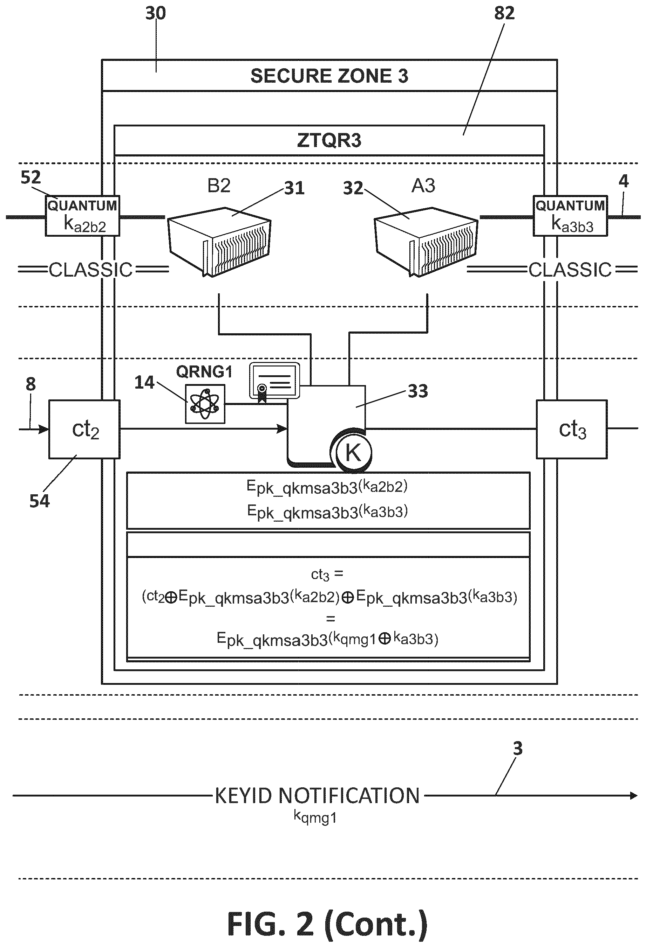

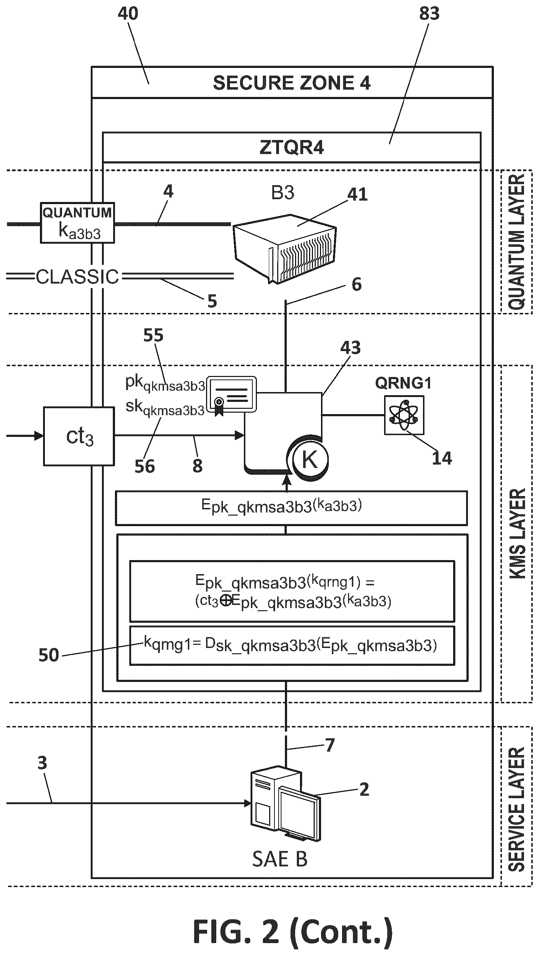

Furthermore, at least the source KMS 13 is associated with a quantum random number generator (QRNG) 14. As shown in the architecture of the system shown in figure 2, each KMS can be associated with its own QRNG 14.

Each KMS and its corresponding QKDMs belong to a same trusted relay 80, 81, 82, 83 and also to a same secure zone 10, 20, 30, 40, also represented in figure 1. In figure 1 it is also illustrated that the source SAE 1 and the destination SAE 2 can belong to the same secure zone 10, 40 as the KMS 13, 43 they are connected to.

As shown in figures 1 and 2, at least the destination KMS 43 comprises a public homomorphic key 55 and a private homomorphic key 56. In general, all the KMSs can comprise their respective private and public homomorphic keys, as illustrated in figure 2.

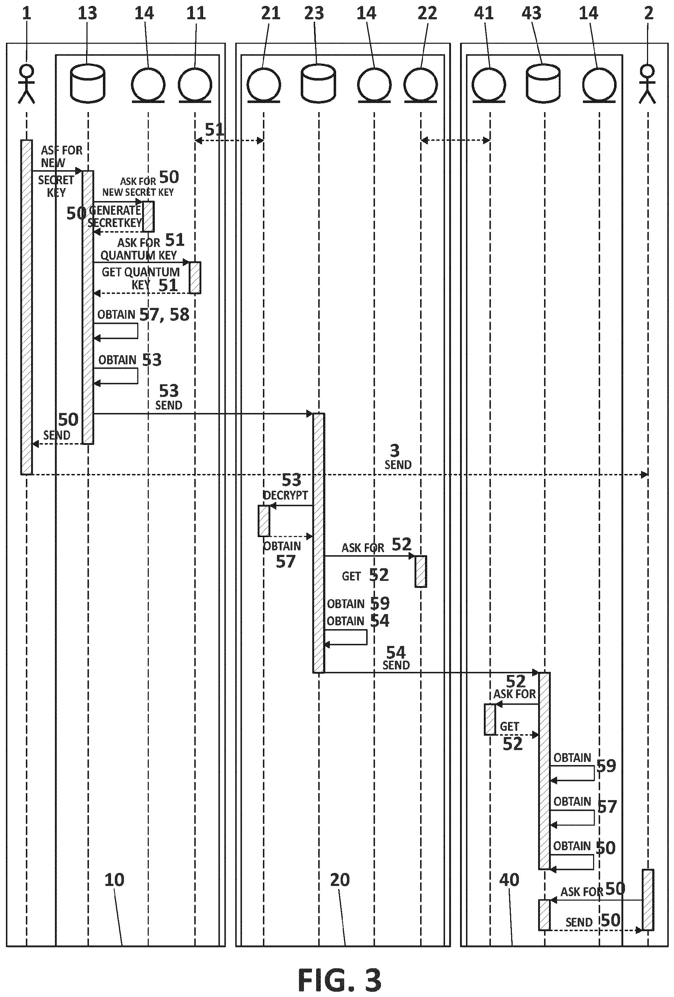

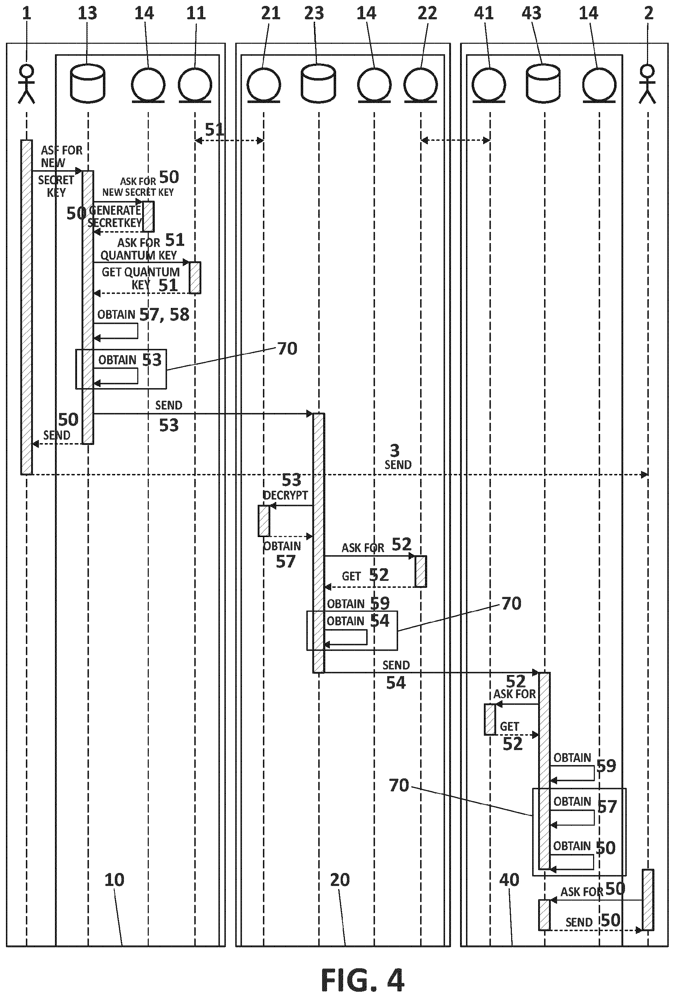

Regarding the methods of the invention, a detailed description will be done next, describing the generating, sending, relaying and receiving methods as a set of steps, one before the other. These steps are also illustrated schematically in figures 3 and 4.

The first step of the method is the source SAE 1 being interested in exchanging a message with the destination SAE 2. The source SAE 1 asks the source KMS 13 to share a key with the destination SAE 2, being said key used to encrypt the message. To do so, the source KMS 13 obtains a route of KMSs that reaches the destination KMS 43 which is connected to the destination SAE 2. For simplicity, a plain network with static routing tables on every KMS node is illustrated.

As illustrated in figure 1, the source SAE 1 is within the source secure zone 10, and it can only interact with the source KMS 13 via the LAN 7. The destination SAE 2 is within the destination secure zone 40 and it can only interact with the destination KMS 43 via its LAN 7.

To request a secret key, the source SAE 1 must request it to the source KMS 13 indicating the destination SAE 2 to share with. The source KMS 13 will check its routing table to identify to which destination KMS 43 the destination SAE 2 is connected. If a route exists, the source KMS 13 will generate a random secret key 50 with its QRNG 14, which is K_{qrng1} in figure 1.

At the same time, as illustrated in figure 3, the source KMS 13 will identify which QKDM in its source secure zone 10 is the first in the route to the destination. In the embodiment illustrated in figure 1, the source QKDM 11, A1. Then, the source KMS 13 requests a quantum key 51, called K_{a1b1} in figure 1, from the source QKDM 11 via the ETSI 014 specification, matching the same size of the secret key 51. The source QKDM 11 responds to the request with a QRNG-generated quantum key.

Then, as represented in figure 3, the source KMS 13 homomorphically encrypts the secret key 50 with the public homomorphic key of the destination KMS 43, which is known to all the network, obtaining and homomorphically encrypted secret key 57, which is E_{pk_qkmsa3b3}(K_{qrng1}) in figure 1. The first KMS 13 also homomorphically encrypts the quantum key 51 with the public homomorphic key 55, obtaining a homomorphically encrypted quantum key 58, E_{pk_qkmsa3b3}(K_{a1b1}).

Then, the first KMS 13 homomorphically operates with an XOR operation, in an embodiment, the homomorphically encrypted secret and quantum keys 57, 58 obtaining a homomorphic key 53 represented as ct₁ in figure 1.

The homomorphic key 53 is sent from the source KMS 13 to the next KMS 23 in the route, which we will call second KMS 21, through a WAN 8. The second KMS 23 is connected to a second QKDM 21, B1, and to a third QKDM 23, A2, in the route. As presented in figure 1, the second QKDM 21 shares with the source QKDM 11 a quantum link 4 and a classical channel 5 and therefore knows the quantum key 51.

In some embodiments, the WAN 8 is a VPN tunnel over the internet, such as an IPSec connection. The technology used for securing this communication is out of the scope of the invention.

When the second KMS 23 receives the homomorphic key 53, it first checks if the destination SAE 2 is present in its secure zone 20. If this is not the case, it requests the quantum key 51 from the second QKDM 21, which belongs to the same quantum link 4 as the source QKDM 11. Next, the second KMS 23 checks its routing table to find the next hop in the route, the next KMS 33, to bring the secret key 50 to its destination. Once the second KMS 23 chooses the next hop in the route, it requests a quantum key, which we will call second quantum key 52, from the third QKDM 23.

Then, the second KMS 23 homomorphically encrypts the quantum key 51 and the second quantum key 52 with the public homomorphic key 55 of the destination KMS 43 obtaining a homomorphically encrypted quantum key 58, E_{pk_qkrnsa3b3}(K_{a1b1}) and a homomorphically encrypted second quantum key 59, E_{pk_qkmsa3b3}(K_{a2b2}). Then, it performs a homomorphic operation between the homomorphic key 53 and the homomorphically encrypted quantum key 58, obtaining the homomorphically encrypted secret key 57. Then, it homomorphically operates the homomorphically encrypted secret key 57 with the homomorphically encrypted second quantum key 59, obtaining a new homomorphic key 54, which is ct₂ in figure 1.

The new homomorphic key 54 is sent through a WAN 8 to the KMS of the next hop where these steps will be repeated until the KMS which receives the request contains the destination SAE 2 in the same secure zone 40.

When the key in transport reaches the destination KMS 43 where the destination SAE 2 is locally connected, the first step is for the destination KMS 43 to request a quantum key 52, K_{a3b3}, which is the second quantum key in this example 53 (although it could be the fourth, fifth, etc. key) from the destination QKDM 41, B3.

As represented in figure 3, the destination KMS 43 obtains said second quantum key 52 and homomorphically encrypts it with its public homomorphic key 55 obtaining a homomorphically encrypted second quantum key 59, E_{pk_qkmsa3b3}(K_{a3b3}). Then, it homomorphically operates said homomorphically encrypted second quantum key 59 with the new homomorphic key 54, obtaining the homomorphically encrypted secret key 57.

Then, the destination KMS 43 decrypts the homomorphically encrypted secret key 57 with is private homomorphic key 56, obtaining the secret key 50, which is the secret key used to share messages between the firs SAE 1 and the destination SAE 2.

The destination KMS 43 then stores the secret key 50 decrypted in its key pool, waiting for the destination SAE 2 to request it.

Similarly, figure 4 shows a SAE that wants to exchange secret keys with a destination SAE 2. In this case, a Trusted Execution Environment (TEE) component 70 is used to preserve the privacy of the key in transport during the homomorphic operations.

In this way, the KMSs will perform the homomorphic operation in their corresponding TEE 70. The derived key from the previous operation will be sent through a WAN 8 to the next KMS of the route abandoning the secure TEE 70.

The same steps of the method can be applied to different scenarios where, for example, there are more than two SAEs in the network. An alternative embodiment could be a network where the first SAE 1 is connected to a KMS connected to at least to QKDMs.

Therefore, the methods and apparatuses of the present invention can be applied to networks with an undefined number of different users and with an undefined number of starting points, keeping the same privacy-preserving techniques described.

The numerical signs and corresponding components indicated in Fig. 1 to 4 are further listed below:
First SAE 1
Last SAE 2
Key ID notification 3
Quantum link 4
Classical channel 5
ETSI 014 specification 6
LAN 7
WAN 8
Source secure zone 10
Source QKDM 11
Source KMS 13
QRNG 14
Second secure zone 20
Second QKDM 21
Third QKDM 22
Second KMS 23
Third secure zone 30
Fourth QKDM 31
Fifth QKDM 32
Third KMS 33
Destination secure zone 40
Destination QKDM 41
Destination KMS 43
Secret key 50
Quantum key 51
Second quantum key 52
Homomorphic key 53
New homomorphic key 54
Public homomorphic key 55
Private homomorphic key 56
Homomorphically encrypted secret key 57
Homomorphically encrypted quantum key 58
Homomorphically encrypted second quantum key 59
TEE 70
Source trusted relay 80
Second trusted relay 81
Third trusted relay 82
Destination trusted relay 83

## Claims

1. A method of generating and sending a secret key, the method comprising:
receiving, at a source key management system, KMS, (13), from a source secure application entity, SAE, (1), a request to share a secret key with a destination SAE (2);
finding, by the source KMS (13), a route to communicate with a destination KMS (43) to which the destination SAE (2) is connected and identifying a next KMS (23) in the route;
generating a secret key (50), the secret key (50) being the key that the source SAE (1) requests to share with the destination SAE (2);
receiving by the source KMS (13) a quantum key (51) from a source quantum key distribution module, QKDM, (11), wherein the secret key (50) and the quantum key (51) are of a same length;
homomorphically encrypting the secret key (50) with a homomorphic public key (55) of the destination KMS (43) to which the destination SAE (2) is connected, obtaining a homomorphically encrypted secret key (57);
homomorphically encrypting the quantum key (51) with the homomorphic public key (55) of the destination KMS (43) to which the destination SAE (2) is connected, obtaining a homomorphically encrypted quantum key (58);
homomorphically operating the homomorphically encrypted secret key (57) with the homomorphically encrypted quantum key (58), obtaining a homomorphic key (53);
sending the homomorphic key (53) to the next KMS (23) in the route.

2. The method of claim 1, wherein the secret key (50) is generated with a quantum random number generator (14) associated to the source KMS (13).

3. The method of any of the previous claims, wherein the homomorphic operation is selected between arithmetic operations in order to replicate the results of a binary XOR or binary XNOR.

4. A method of relaying a secret key (50), wherein the secret key has been originated in a source KMS (13) to which a source SAE (1) is connected, and wherein the secret key (50) is to be transmitted to a destination KMS (43) to which a destination SAE (2) is connected, the method comprising:
receiving by a KMS (23) different from the source KMS (13) and the destination KMS (43) a homomorphic key (53), wherein the homomorphic key (53) contains a homomorphically encrypted secret key (57) homomorphically encrypted with a homomorphic public key (55) of the destination KMS (43) and a homomorphically encrypted quantum key (59) homomorphically encrypted with the homomorphic public key (55) of the destination KMS (43), wherein the homomorphically encrypted secret key (57) has been homomorphically encrypted in the source KMS (13) connected to a source SAE (1) who sent the source KMS (13) a request to share a secret key (50) with the destination SAE (2);
receiving by the KMS (23) a first quantum key (51) from a first QKDM (21), the first QKDM (21) being a QKDM connected to the source QKDM (11), or another intermediate QKDM necessary to reach the source KMS (13) to which the source SAE (1) is connected,
receiving by the KMS (23) a second quantum key (52) from a second QKDM (22), the second QKDM (22) being a QKDM connected to a destination QKDM (41) connected to the destination KMS (43), or another intermediate QKDM necessary to reach the destination KMS (43) to which the destination SAE (2) is connected,
homomorphically encrypting the first quantum key (51) with a homomorphic public key (55) of the destination KMS (43) to which the destination SAE (2) is connected, obtaining a homomorphically encrypted first quantum key (58);
homomorphically encrypting the second quantum key (52) with the homomorphic public key (55) of the destination KMS (43) to which the destination SAE (2) is connected, obtaining a homomorphically encrypted second quantum key (59);
homomorphically operating the received homomorphic key (53), the homomorphically encrypted first quantum key (58) and the homomorphically encrypted second quantum key (59), obtaining a new homomorphic key (54),
sending the new homomorphic key (54) to a next KMS, this next KMS being either the destination KMS (43) connected to the destination SAE (2), or another intermediate KMS (33) necessary to reach the destination KMS (43) to which the destination SAE (2) is connected.

5. The method of claim 4, wherein it is repeated until the next KMS is the destination KMS (43) connected to the destination SAE (2).

6. A method of receiving a secret key (50), the method comprising:
receiving by a destination KMS (43) connected to a destination SAE (2) a homomorphic key (54), wherein the homomorphic key (54) contains a homomorphically encrypted secret key (57) homomorphically encrypted with a homomorphic public key (55) of the destination KMS (43) and a homomorphically encrypted quantum key (59) homomorphically encrypted with the homomorphic public key (55) of the destination KMS (43), wherein the homomorphically encrypted secret key (57) has been homomorphically encrypted in a source KMS (13) connected to a source SAE (1) who sent the source KMS (13) a request to share a secret key (50) with the destination SAE (2);
receiving by the destination KMS (43) a quantum key (52) from a QKDM (22) connected to the destination KMS (43);
homomorphically encrypting the quantum key (52) with the homomorphic public key (55) of the destination KMS (43), obtaining a homomorphically encrypted quantum key (59);
homomorphically operating the homomorphic key (53) and the homomorphically encrypted quantum key (59), obtaining the homomorphically encrypted secret key (57); and
decrypting the homomorphically encrypted secret key (57) with a homomorphic private key (56) of the destination KMS (43), thus obtaining the secret key (50).

7. A method of exchanging a secret key (30), the method comprising:
sending a homomorphic key which contains a homomorphically encrypted secret key (57) by applying the method of generating and sending a secret key, of any one of claims 1 to 3;
receiving and relaying a new homomorphic key by applying the method of claims 4 or 5;
repeating the relaying step until the homomorphic key arrives at a destination KMS (43) connected to a destination SAE (2); and
receiving the homomorphic key and obtaining the secret key by applying the method of receiving a secret key, of claim 6.

8. **The** method of any of the previous claims, wherein the homomorphic operations are executed within a trusted execution environment (70).

9. An apparatus (13) for generating and sending a secret key, the apparatus comprising:
means for receiving, from a source secure application entity (SAE) (1), a request to share a key with a destination SAE (2);
means for finding a route to communicate with a destination apparatus to which the destination SAE (2) is connected and identifying a next apparatus in the route;
means for generating a secret key (50), the secret key (50) being the key that the source SAE (1) requests to share with the destination SAE (2);
means for receiving a quantum key (51) from a source QKDM (11), wherein the secret key (50) and the quantum key (51) are of a same length;
means for homomorphically encrypting the secret key (50) with a homomorphic public key (55) of the destination apparatus to which the destination SAE (2) is connected, obtaining a homomorphically encrypted secret key (57);
means for homomorphically encrypting the quantum key (51) with the homomorphic public key (55) of the destination apparatus to which the destination SAE (2) is connected, obtaining a homomorphically encrypted quantum key (58);
means for homomorphically operating the homomorphically encrypted secret key (57) with the homomorphically encrypted quantum key (58), obtaining a homomorphic key (53);
means for sending the homomorphic key (53) to the next apparatus in the route.

10. An apparatus (23, 33) for relaying a secret key, wherein the secret key has been originated in a source apparatus to which a source SAE (1) is connected, and wherein the secret key is to be transmitted to a destination apparatus to which a destination SAE (2) is connected, the apparatus (23, 33) comprising:
means for receiving a homomorphic key which contains a homomorphically encrypted secret key (57) and a homomorphically encrypted quantum key (58);
means for receiving a first quantum key (51) from a first QKDM (21), the first QKDM (21) a QKDM connected to the source apparatus, or another intermediate QKDM necessary to reach the source apparatus to which the source SAE (1) is connected,
means for receiving a second quantum key (52) from a second QKDM (22), the second QKDM (22) being a QKDM connected to a destination QKDM (41) connected to the destination apparatus, or another intermediate QKDM necessary to reach the destination apparatus to which the destination SAE (2) is connected,
means for homomorphically encrypting the first quantum key (51) with a homomorphic public key (55) of the destination apparatus to which the destination SAE (2) is connected, obtaining a homomorphically encrypted first quantum key (58);
means for homomorphically encrypting the second quantum key (52) with the homomorphic public key (55) of the destination apparatus to which the destination SAE (2) is connected, obtaining a homomorphically encrypted second quantum key (59);
means for homomorphically operating the received homomorphic key (53), the homomorphically encrypted first quantum key (58) and the homomorphically encrypted second quantum key (59), obtaining a new homomorphic key (54),
means for sending the new homomorphic key (54) to a next apparatus, this next apparatus being either the destination apparatus connected to the destination SAE (2), or another intermediate apparatus necessary to reach the destination apparatus to which the destination SAE (2) is connected.

11. Apparatus (43) for receiving a secret key, wherein the secret key has been originated in a source apparatus to which a source SAE (1) is connected, and wherein the apparatus is connected to a destination SAE (2), the apparatus (43) comprising:
means for receiving a homomorphic key (54), wherein the homomorphic key (54) contains a homomorphically encrypted secret key (57) homomorphically encrypted with a homomorphic public key (55) of the apparatus and a homomorphically encrypted quantum key (59) homomorphically encrypted with the homomorphic public key (55) of the apparatus, wherein the homomorphically encrypted secret key (57) has been homomorphically encrypted in source apparatus connected to the source SAE (1);
means for receiving a quantum key (52) from a QKDM (22) connected to the apparatus;
means for homomorphically encrypting the quantum key (52) with the homomorphic public key (55) of the apparatus, obtaining a homomorphically encrypted quantum key (59);
means for homomorphically operating the homomorphic key (53) and the homomorphically encrypted quantum key (59), obtaining the homomorphically encrypted secret key (57); and
means for decrypting the homomorphically encrypted secret key (57) with a homomorphic private key (56) of the apparatus, thus obtaining the secret key (50).

12. The apparatus of any of claims 9 to 11 wherein the apparatus is integrated in a QKDM.

13. The apparatus of any of claims 9 to 11 wherein the apparatus is an apparatus different from a QKDM.

14. A computer program product comprising computer program instructions/code for performing the method according to any one of claims 1-8.

15. A computer-readable memory/medium that stores program instructions/code for performing the method according to any one of claims 1-8.

## Patentansprüche

1. Verfahren zum Erzeugen und Senden eines geheimen Schlüssels, umfassend:
Empfangen, an einem Quell-Schlüsselverwaltungssystem KMS (13), von einer Quell-sicheren Anwendungseinheit SAE (1), einer Anforderung, einen geheimen Schlüssel mit einer Ziel-SAE (2) zu teilen;
Auffinden, durch das Quell-KMS (13), eines Pfades zur Kommunikation mit einem Ziel-KMS (43), mit dem die Ziel-SAE (2) verbunden ist, und Identifizieren eines nächsten KMS (23) in dem Pfad;
Erzeugen eines geheimen Schlüssels (50), wobei der geheime Schlüssel (50) der Schlüssel ist, dessen Teilen mit der Ziel-SAE (2) die Quell-SAE (1) anfordert;
Empfangen, durch das Quell-KMS (13), eines Quantenschlüssels (51) von einem Quell-Quantenschlüsselverteilungsmodul (QKDM) (11),
wobei der geheime Schlüssel (50) und der Quantenschlüssel (51) dieselbe Länge aufweisen;
homomorphes Verschlüsseln des geheimen Schlüssels (50) mit einem homomorphischen öffentlichen Schlüssel (55) des Ziel-KMS (43), mit dem die Ziel-SAE (2) verbunden ist, wodurch ein homomorph verschlüsselter geheimer Schlüssel (57) erhalten wird;
homomorphes Verschlüsseln des Quantenschlüssels (51) mit dem homomorphischen öffentlichen Schlüssel (55) des Ziel-KMS (43), mit dem die Ziel-SAE (2) verbunden ist, wodurch ein homomorph verschlüsselter Quantenschlüssel (58) erhalten wird;
homomorphes Verarbeiten des homomorph verschlüsselten geheimen Schlüssels (57) mit dem homomorph verschlüsselten Quantenschlüssel (58), wodurch ein homomorphischer Schlüssel (53) erhalten wird;
Senden des homomorphischen Schlüssels (53) an das nächste KMS (23) in dem Pfad.

2. Verfahren nach Anspruch 1, wobei der geheime Schlüssel (50) mit einem Quanten-Zufallszahlengenerator (14) erzeugt wird, der dem Quell-KMS (13) zugeordnet ist.

3. Verfahren nach einem der vorhergehenden Ansprüche, wobei die homomorphe Verarbeitung aus arithmetischen Operationen ausgewählt wird, um die Ergebnisse eines binären XOR oder eines binären XNOR nachzubilden.

4. Verfahren zum Weiterleiten eines geheimen Schlüssels (50), wobei der geheime Schlüssel in einem Quell-KMS (13), mit dem eine Quell-SAE (1) verbunden ist, erzeugt wurde und wobei der geheime Schlüssel (50) an ein Ziel-KMS (43), mit dem eine Ziel SAE (2) verbunden ist, zu übertragen ist, wobei das Verfahren umfasst:
Empfangen, durch ein KMS (23), das sich von dem Quell-KMS (13) und dem Ziel-KMS (43) unterscheidet, eines homomorphischen Schlüssels (53), wobei der homomorphische Schlüssel (53) einen homomorph verschlüsselten geheimen Schlüssel (57) enthält, der mit einem homomorphischen öffentlichen Schlüssel (55) des Ziel-KMS (43) homomorph verschlüsselt ist, und einen homomorph verschlüsselten Quantenschlüssel (59), der mit dem homomorphischen öffentlichen Schlüssel (55) des Ziel-KMS (43) homomorph verschlüsselt ist, wobei der homomorph verschlüsselte geheime Schlüssel (57) in dem Quell-KMS (13), das mit einer Quell-SAE (1) verbunden ist, die dem Quell-KMS (13) eine Anforderung zum Teilen eines geheimen Schlüssels (50) mit der Ziel-SAE (2) gesendet hat, homomorph verschlüsselt worden ist;
Empfangen, durch das KMS (23), eines ersten Quantenschlüssels (51) von einem ersten QKDM (21), wobei das erste QKDM (21) ein QKDM ist, das mit dem Quell-QKDM (11) verbunden ist, oder ein anderes Zwischen-QKDM, das erforderlich ist, um das Quell-KMS (13) mit dem die Quell-SAE (1) verbunden ist, zu erreichen;
Empfangen, durch das KMS (23), eines zweiten Quantenschlüssels (52) von einem zweiten QKDM (22), wobei das zweite QKDM (22) ein QKDM ist, das mit einem Ziel-QKDM (41) verbunden ist, das mit dem Ziel-KMS (43) verbunden ist, oder ein anderes Zwischen-QKDM, das erforderlich ist, um das Ziel-KMS (43) zu erreichen, mit dem die Ziel-SAE (2) verbunden ist;
homomorphes Verschlüsseln des ersten Quantenschlüssels (51) mit einem homomorphischen öffentlichen Schlüssel (55) des Ziel-KMS (43), mit dem die Ziel-SAE (2) verbunden ist, wodurch ein homomorph verschlüsselter erster Quantenschlüssel (58) erhalten wird;
homomorphes Verschlüsseln des zweiten Quantenschlüssels (52) mit dem homomorphischen öffentlichen Schlüssel (55) des Ziel-KMS (43), mit dem die Ziel-SAE (2) verbunden ist, wodurch ein homomorph verschlüsselter zweiter Quantenschlüssel (59) erhalten wird;
homomorphes Verarbeiten des empfangenen homomorphischen Schlüssels (53), des homomorph verschlüsselten ersten Quantenschlüssels (58) und des homomorph verschlüsselten zweiten Quantenschlüssels (59), wodurch ein neuer homomorphischer Schlüssel (54) erhalten wird;
Senden des neuen homomorphischen Schlüssels (54) an ein nächstes KMS, wobei dieses nächste KMS entweder das Ziel-KMS (43) ist, das mit der Ziel-SAE (2) verbunden ist, oder ein anderes Zwischen-KMS (33), das erforderlich ist, um das Ziel-KMS (43) zu erreichen, mit dem die Ziel-SAE (2) verbunden ist.

5. Verfahren nach Anspruch 4, wobei das Verfahren wiederholt wird, bis das nächste KMS das Ziel-KMS (43) ist, das mit der Ziel-SAE (2) verbunden ist.

6. Verfahren zum Empfangen eines geheimen Schlüssels (50), umfassend:
Empfangen, durch ein Ziel-KMS (43), das mit einer Ziel-SAE (2) verbunden ist, eines homomorphischen Schlüssels (54), wobei der homomorphische Schlüssel (54) einen homomorph verschlüsselten geheimen Schlüssel (57) enthält, der mit einem homomorphischen öffentlichen Schlüssel (55) des Ziel-KMS (43) homomorph verschlüsselt ist, und einen homomorph verschlüsselten Quantenschlüssel (59), der mit dem homomorphischen öffentlichen Schlüssel (55) des Ziel-KMS (43) homomorph verschlüsselt ist, wobei der homomorph verschlüsselte geheime Schlüssel (57) in einem Quell-KMS (13), das mit einer Quell-SAE (1) verbunden ist, die dem Quell-KMS (13) eine Anforderung zum Teilen eines geheimen Schlüssels (50) mit der Ziel-SAE (2) gesendet hat, homomorph verschlüsselt worden ist;
Empfangen, durch das Ziel-KMS (43), eines Quantenschlüssels (52) von einem QKDM (22), das mit dem Ziel-KMS (43) verbunden ist;
homomorphes Verschlüsseln des Quantenschlüssels (52) mit dem homomorphischen öffentlichen Schlüssel (55) des Ziel-KMS (43), wodurch ein homomorph verschlüsselter Quantenschlüssel (59) erhalten wird;
homomorphes Verarbeiten des homomorphischen Schlüssels (53) und des homomorph verschlüsselten Quantenschlüssels (59), wodurch der homomorph verschlüsselte geheime Schlüssel (57) erhalten wird; und
Entschlüsseln des homomorph verschlüsselten geheimen Schlüssels (57) mit einem homomorphischen privaten Schlüssel (56) des Ziel-KMS (43), wodurch der geheime Schlüssel (50) erhalten wird.

7. Verfahren zum Austauschen eines geheimen Schlüssels (30), umfassend:
Senden eines homomorphischen Schlüssels, der einen homomorph verschlüsselten geheimen Schlüssel (57) enthält, durch Anwenden des Verfahrens zum Erzeugen und Senden eines geheimen Schlüssels nach einem der Ansprüche 1 bis 3;
Empfangen und Weiterleiten eines neuen homomorphischen Schlüssels durch Anwenden des Verfahrens nach Anspruch 4 oder 5;
Wiederholen des Weiterleitungsschritts, bis der homomorphische Schlüssel bei einem Ziel-KMS (43) ankommt, das mit einer Ziel-SAE (2) verbunden ist; und
Empfangen des homomorphischen Schlüssels und Erhalten des geheimen Schlüssels durch Anwenden des Verfahrens zum Empfangen eines geheimen Schlüssels nach Anspruch 6.

8. Verfahren nach einem der vorhergehenden Ansprüche, wobei die homomorphen Verarbeitungen innerhalb einer vertrauenswürdigen Ausführungsumgebung (70) ausgeführt werden.

9. Vorrichtung (13) zum Erzeugen und Senden eines geheimen Schlüssels, umfassend:
Mittel zum Empfangen, von einer Quell-sicheren Anwendungseinheit (SAE) (1), einer Anforderung, einen Schlüssel mit einer Ziel-SAE (2) zu teilen;
Mittel zum Auffinden eines Pfades zur Kommunikation mit einer Ziel-Vorrichtung, mit der die Ziel-SAE (2) verbunden ist, und zum Identifizieren einer nächsten Vorrichtung in dem Pfad;
Mittel zum Erzeugen eines geheimen Schlüssels (50), wobei der geheime Schlüssel (50) der Schlüssel ist, dessen Teilen mit der Ziel-SAE (2) die Quell-SAE (1) anfordert;
Mittel zum Empfangen eines Quantenschlüssels (51) von einem Quell-QKDM (11), wobei der geheime Schlüssel (50) und der Quantenschlüssel (51) dieselbe Länge aufweisen;
Mittel zum homomorphen Verschlüsseln des geheimen Schlüssels (50) mit einem homomorphischen öffentlichen Schlüssel (55) der Ziel-Vorrichtung, mit der die Ziel-SAE (2) verbunden ist, wodurch ein homomorph verschlüsselter geheimer Schlüssel (57) erhalten wird;
Mittel zum homomorphen Verschlüsseln des Quantenschlüssels (51) mit dem homomorphischen öffentlichen Schlüssel (55) der Ziel-Vorrichtung, mit der die Ziel-SAE (2) verbunden ist, wodurch ein homomorph verschlüsselter Quantenschlüssel (58) erhalten wird;
Mittel zum homomorphen Verarbeiten des homomorph verschlüsselten geheimen Schlüssels (57) mit dem homomorph verschlüsselten Quantenschlüssel (58), wodurch ein homomorphischer Schlüssel (53) erhalten wird;
Mittel zum Senden des homomorphischen Schlüssels (53) an die nächste Vorrichtung in dem Pfad.

10. Vorrichtung (23, 33) zum Weiterleiten eines geheimen Schlüssels, wobei der geheime Schlüssel in einer Quell-Vorrichtung erzeugt wurde, mit der eine Quell-SAE (1) verbunden ist, und wobei der geheime Schlüssel an eine Zielvorrichtung, mit der eine Ziel-SAE (2) verbunden ist, zu übertragen ist, wobei die Vorrichtung (23, 33) umfasst:
Mittel zum Empfangen eines homomorphischen Schlüssels, der einen homomorph verschlüsselten geheimen Schlüssel (57) und einen homomorph verschlüsselten Quantenschlüssel (58) enthält;
Mittel zum Empfangen eines ersten Quantenschlüssels (51) von einem ersten QKDM (21), wobei das erste QKDM (21) ein QKDM ist, das mit der Quell-Vorrichtung verbunden ist, oder ein weiteres Zwischen-QKDM, das erforderlich ist, um die Quell-Vorrichtung zu erreichen, mit der die Quell-SAE (1) verbunden ist;
Mittel zum Empfangen eines zweiten Quantenschlüssels (52) von einem zweiten QKDM (22), wobei das zweite QKDM (22) ein QKDM ist, das mit einem Ziel-QKDM (41) verbunden ist, das mit der Ziel-Vorrichtung verbunden ist, oder ein weiteres Zwischen-QKDM, das erforderlich ist, um die Ziel-Vorrichtung zu erreichen, mit der die Ziel-SAE (2) verbunden ist;
Mittel zum homomorphen Verschlüsseln des ersten Quantenschlüssels (51) mit einem homomorphischen öffentlichen Schlüssel (55) der Ziel-Vorrichtung, mit der die Ziel-SAE (2) verbunden ist, wodurch ein homomorph verschlüsselter erster Quantenschlüssel (58) erhalten wird;
Mittel zum homomorphen Verschlüsseln des zweiten Quantenschlüssels (52) mit dem homomorphischen öffentlichen Schlüssel (55) der Ziel-Vorrichtung, mit der die Ziel-SAE (2) verbunden ist, wodurch ein homomorph verschlüsselter zweiter Quantenschlüssel (59) erhalten wird;
Mittel zum homomorphen Verarbeiten des empfangenen homomorphischen Schlüssels (53), des homomorph verschlüsselten ersten Quantenschlüssels (58) und des homomorph verschlüsselten zweiten Quantenschlüssels (59), wodurch ein neuer homomorphischer Schlüssel (54) erhalten wird;
Mittel zum Senden des neuen homomorphischen Schlüssels (54) an eine nächste Vorrichtung, wobei diese nächste Vorrichtung entweder die Ziel-Vorrichtung ist, die mit der Ziel-SAE (2) verbunden ist, oder eine weitere Zwischen-Vorrichtung, die erforderlich ist, um die Ziel-Vorrichtung zu erreichen, mit der die Ziel-SAE (2) verbunden ist.

11. Vorrichtung (43) zum Empfangen eines geheimen Schlüssels, wobei der geheime Schlüssel in einer Quell-Vorrichtung erzeugt wurde, mit der eine Quell-SAE (1) verbunden ist, und wobei die Vorrichtung mit einer Ziel-SAE (2) verbunden ist, wobei die Vorrichtung (43) umfasst:
Mittel zum Empfangen eines homomorphischen Schlüssels (54), wobei der homomorphische Schlüssel (54) einen homomorph verschlüsselten geheimen Schlüssel (57) enthält, der mit einem homomorphischen öffentlichen Schlüssel (55) der Vorrichtung homomorph verschlüsselt ist, und einen homomorph verschlüsselten Quantenschlüssel (59), der mit dem homomorphischen öffentlichen Schlüssel (55) der Vorrichtung homomorph verschlüsselt ist, wobei der homomorph verschlüsselte geheime Schlüssel (57) in einer Quell-Vorrichtung homomorph verschlüsselt wurde, die mit der Quell-SAE (1) verbunden ist;
Mittel zum Empfangen eines Quantenschlüssels (52) von einem QKDM (22), das mit der Vorrichtung verbunden ist;
Mittel zum homomorphen Verschlüsseln des Quantenschlüssels (52) mit dem homomorphischen öffentlichen Schlüssel (55) der Vorrichtung, wodurch ein homomorph verschlüsselter Quantenschlüssel (59) erhalten wird;
Mittel zum homomorphen Verarbeiten des homomorphischen Schlüssels (53) und des homomorph verschlüsselten Quantenschlüssels (59), wodurch der homomorph verschlüsselte geheime Schlüssel (57) erhalten wird; und
Mittel zum Entschlüsseln des homomorph verschlüsselten geheimen Schlüssels (57) mit einem homomorphischen privaten Schlüssel (56) der Vorrichtung, wodurch der geheime Schlüssel (50) erhalten wird.

12. Vorrichtung nach einem der Ansprüche 9 bis 11, wobei die Vorrichtung in ein QKDM integriert ist.

13. Vorrichtung nach einem der Ansprüche 9 bis 11, wobei die Vorrichtung eine Vorrichtung ist, die sich von einem QKDM unterscheidet.

14. Computerprogrammprodukt, das Computerprogrammanweisungen/-code zum Ausführen des Verfahrens nach einem der Ansprüche 1 bis 8 umfasst.

15. Computerlesbarer Speicher/Medium, der/das Programmanweisungen/-code zum Ausführen des Verfahrens nach einem der Ansprüche 1 bis 8 speichert.

## Revendications

1. Méthode de génération et d'envoi d'une clé secrète, la méthode comprenant les étapes suivantes :
au niveau d'un système de gestion de clés, KMS, source (13), recevoir d'une entité d'application sécurisée, SAE, source (1) une demande de partage d'une clé secrète avec une SAE de destination (2) ;
trouver par le KMS source (13) un itinéraire pour communiquer avec un KMS de destination (43) auquel la SAE de destination (2) est connectée et identifier un KMS suivant (23) dans l'itinéraire ;
générer une clé secrète (50), la clé secrète (50) étant la clé que la SAE source (1) demande à partager avec la SAE de destination (2) ;
recevoir d'un module de distribution de clés quantiques, QKDM, source (11), par le KMS source (13), une clé quantique (51), dans laquelle la clé secrète (50) et la clé quantique (51) ont la même longueur ;
chiffrer de manière homomorphe la clé secrète (50) à l'aide d'une clé publique homomorphe (55) du KMS de destination (43) auquel la SAE de destination (2) est connectée, obtenant une clé secrète chiffrée de manière homomorphe (57) ;
chiffrer de manière homomorphe la clé quantique (51) à l'aide de la clé publique homomorphe (55) du KMS de destination (43) auquel la SAE de destination (2) est connectée, obtenant une clé quantique chiffrée de manière homomorphe (58) ;
actionner de manière homomorphe la clé secrète chiffrée de manière homomorphe (57) avec la clé quantique chiffrée de manière homomorphe (58), obtenant une clé homomorphe (53) ;
envoyer la clé homomorphe (53) au KMS suivant (23) dans l'itinéraire.

2. Méthode selon la revendication 1, dans laquelle la clé secrète (50) est générée à l'aide d'un générateur de nombres aléatoires quantiques (14) associé au KMS source (13).

3. Méthode selon l'une des revendications précédentes, dans laquelle l'opération homomorphe est choisie parmi des opérations arithmétiques afin de reproduire les résultats d'un OU exclusif binaire ou d'un NON-OU exclusif binaire.

4. Méthode de relais d'une clé secrète (50), dans laquelle la clé secrète provient d'un KMS source (13) auquel une SAE source (1) est connectée, et dans laquelle la clé secrète (50) doit être transmise à un KMS de destination (43) auquel une SAE de destination (2) est connectée, la méthode comprenant les étapes suivantes :
recevoir par un KMS (23) différent du KMS source (13) et du KMS de destination (43) une clé homomorphe (53), dans laquelle la clé homomorphe (53) contient une clé secrète chiffrée de manière homomorphe (57) qui a été chiffrée de manière homomorphe à l'aide d'une clé publique homomorphe (55) du KMS de destination (43) et une clé quantique chiffrée de manière homomorphe (59) qui a été chiffrée de manière homomorphe à l'aide de la clé publique homomorphe (55) du KMS de destination (43), dans laquelle la clé secrète chiffrée de manière homomorphe (57) a été chiffrée de manière homomorphe dans le KMS source (13) connecté à une SAE source (1) qui a envoyé au KMS source (13) une demande de partage d'une clé secrète (50) avec la SAE de destination (2) ;
recevoir d'un premier QKDM (21), par le KMS (23), une première clé quantique (51), le premier QKDM (21) étant un QKDM connecté au QKDM source (11) ou un autre QKDM intermédiaire nécessaire pour atteindre le KMS source (13) auquel la SAE source (1) est connectée,
recevoir d'un deuxième QKDM (22), par le KMS (23), une deuxième clé quantique (52), le deuxième QKDM (22) étant un QKDM connecté à un QKDM de destination (41) connecté au KMS de destination (43) ou un autre QKDM intermédiaire nécessaire pour atteindre le KMS de destination (43) auquel la SAE de destination (2) est connectée,
chiffrer de manière homomorphe la première clé quantique (51) à l'aide d'une clé publique homomorphe (55) du KMS de destination (43) auquel la SAE de destination (2) est connectée, obtenant une première clé quantique chiffrée de manière homomorphe (58) ;
chiffrer de manière homomorphe la deuxième clé quantique (52) à l'aide de la clé publique homomorphe (55) du KMS de destination (43) auquel la SAE de destination (2) est connectée, obtenant une deuxième clé quantique chiffrée de manière homomorphe (59) ;
actionner de manière homomorphe la clé homomorphe (53) reçue, la première clé quantique chiffrée de manière homomorphe (58) et la deuxième clé quantique chiffrée de manière homomorphe (59), obtenant une nouvelle clé homomorphe (54),
envoyer la nouvelle clé homomorphe (54) à un KMS suivant, ce KMS suivant étant soit le KMS de destination (43) connecté à la SAE de destination (2), soit un autre KMS intermédiaire (33) nécessaire pour atteindre le KMS de destination (43) auquel la SAE de destination (2) est connectée.

5. Méthode selon la revendication 4, dans laquelle elle est répétée jusqu'à ce que le KMS suivant soit le KMS de destination (43) connecté à la SAE de destination (2).

6. Méthode de réception d'une clé secrète (50), la méthode comprenant les étapes suivantes :
recevoir par un KMS de destination (43) connecté à une SAE de destination (2) une clé homomorphe (54), dans laquelle la clé homomorphe (54) contient une clé secrète chiffrée de manière homomorphe (57) qui a été chiffrée de manière homomorphe à l'aide d'une clé publique homomorphe (55) du KMS de destination (43) et une clé quantique chiffrée de manière homomorphe (59) qui a été chiffrée de manière homomorphe à l'aide de la clé publique homomorphe (55) du KMS de destination (43), dans laquelle la clé secrète chiffrée de manière homomorphe (57) a été chiffrée de manière homomorphe dans un KMS source (13) connecté à une SAE source (1) qui a envoyé au KMS source (13) une demande de partage d'une clé secrète (50) avec la SAE de destination (2) ;
recevoir d'un QKDM (22) connecté au KMS de destination (43), par le KMS de destination (43), une clé quantique (52) ;
chiffrer de manière homomorphe la clé quantique (52) à l'aide de la clé publique homomorphe (55) du KMS de destination (43), obtenant une clé quantique chiffrée de manière homomorphe (59) ;
actionner de manière homomorphe la clé homomorphe (53) et la clé quantique chiffrée de manière homomorphe (59), obtenant la clé secrète chiffrée de manière homomorphe (57) ; et
déchiffrer la clé secrète chiffrée de manière homomorphe (57) à l'aide d'une clé privée homomorphe (56) du KMS de destination (43), obtenant ainsi la clé secrète (50).

7. Méthode d'échange d'une clé secrète (30), la méthode comprenant les étapes suivantes :
envoyer une clé homomorphe qui contient une clé secrète chiffrée de manière homomorphe (57) en appliquant la méthode de génération et d'envoi d'une clé secrète selon l'une des revendications 1 à 3 ;
recevoir et relayer une nouvelle clé homomorphe en appliquant la méthode selon la revendication 4 ou 5 ;
répéter l'étape de relais jusqu'à ce que la clé homomorphe arrive à un KMS de destination (43) connecté à une SAE de destination (2) ; et
recevoir la clé homomorphe et obtenir la clé secrète en appliquant la méthode de réception d'une clé secrète selon la revendication 6.

8. Méthode selon l'une des revendications précédentes, dans laquelle les opérations homomorphes sont exécutées au sein d'un environnement d'exécution de confiance (70).

9. Appareil (13) pour générer et envoyer une clé secrète, l'appareil comprenant :
des moyens pour recevoir d'une entité d'application sécurisée, SAE, source (1) une demande de partage d'une clé avec une SAE de destination (2) ;
des moyens pour trouver un itinéraire pour communiquer avec un appareil de destination auquel la SAE de destination (2) est connectée et identifier un appareil suivant dans l'itinéraire ;
des moyens pour générer une clé secrète (50), la clé secrète (50) étant la clé que la SAE source (1) demande à partager avec la SAE de destination (2) ;
des moyens pour recevoir d'un QKDM source (11) une clé quantique (51), dans lequel la clé secrète (50) et la clé quantique (51) ont la même longueur ;
des moyens pour chiffrer de manière homomorphe la clé secrète (50) à l'aide d'une clé publique homomorphe (55) de l'appareil de destination auquel la SAE de destination (2) est connectée, obtenant une clé secrète chiffrée de manière homomorphe (57) ;
des moyens pour chiffrer de manière homomorphe la clé quantique (51) à l'aide de la clé publique homomorphe (55) de l'appareil de destination auquel la SAE de destination (2) est connectée, obtenant une clé quantique chiffrée de manière homomorphe (58) ;
des moyens pour actionner de manière homomorphe la clé secrète chiffrée de manière homomorphe (57) avec la clé quantique chiffrée de manière homomorphe (58), obtenant une clé homomorphe (53) ;
des moyens pour envoyer la clé homomorphe (53) à l'appareil suivant dans l'itinéraire.

10. Appareil (23, 33) pour relayer une clé secrète, dans lequel la clé secrète provient d'un appareil source auquel une SAE source (1) est connectée, et dans lequel la clé secrète doit être transmise à un appareil de destination auquel une SAE de destination (2) est connectée, l'appareil (23, 33) comprenant :
des moyens pour recevoir une clé homomorphe qui contient une clé secrète chiffrée de manière homomorphe (57) et une clé quantique chiffrée de manière homomorphe (58) ;
des moyens pour recevoir d'un premier QKDM (21) une première clé quantique (51), le premier QKDM (21) étant un QKDM connecté à l'appareil source ou un autre QKDM intermédiaire nécessaire pour atteindre l'appareil source auquel la SAE source (1) est connectée,
des moyens pour recevoir d'un deuxième QKDM (22) une deuxième clé quantique (52), le deuxième QKDM (22) étant un QKDM connecté à un QKDM de destination (41) connecté à l'appareil de destination ou un autre QKDM intermédiaire nécessaire pour atteindre l'appareil de destination auquel la SAE de destination (2) est connectée,
des moyens pour chiffrer de manière homomorphe la première clé quantique (51) à l'aide d'une clé publique homomorphe (55) de l'appareil de destination auquel la SAE de destination (2) est connectée, obtenant une première clé quantique chiffrée de manière homomorphe (58) ;
des moyens pour chiffrer de manière homomorphe la deuxième clé quantique (52) à l'aide de la clé publique homomorphe (55) de l'appareil de destination auquel la SAE de destination (2) est connectée, obtenant une deuxième clé quantique chiffrée de manière homomorphe (59) ;
des moyens pour actionner de manière homomorphe la clé homomorphe (53) reçue, la première clé quantique chiffrée de manière homomorphe (58) et la deuxième clé quantique chiffrée de manière homomorphe (59), obtenant une nouvelle clé homomorphe (54),
des moyens pour envoyer la nouvelle clé homomorphe (54) à un appareil suivant, cet appareil suivant étant soit l'appareil de destination connecté à la SAE de destination (2), soit un autre appareil intermédiaire nécessaire pour atteindre l'appareil de destination auquel la SAE de destination (2) est connectée.

11. Appareil (43) pour recevoir une clé secrète, dans lequel la clé secrète provient d'un appareil source auquel une SAE source (1) est connectée, et dans lequel l'appareil est connecté à une SAE de destination (2), l'appareil (43) comprenant :
des moyens pour recevoir une clé homomorphe (54), dans lequel la clé homomorphe (54) contient une clé secrète chiffrée de manière homomorphe (57) qui a été chiffrée de manière homomorphe à l'aide d'une clé publique homomorphe (55) de l'appareil et une clé quantique chiffrée de manière homomorphe (59) qui a été chiffrée de manière homomorphe à l'aide de la clé publique homomorphe (55) de l'appareil, dans lequel la clé secrète chiffrée de manière homomorphe (57) a été chiffrée de manière homomorphe dans l'appareil source connecté à la SAE source (1) ;
des moyens pour recevoir une clé quantique (52) d'un QKDM (22) connecté à l'appareil ;
des moyens pour chiffrer de manière homomorphe la clé quantique (52) à l'aide de la clé publique homomorphe (55) de l'appareil, obtenant une clé quantique chiffrée de manière homomorphe (59) ;
des moyens pour actionner de manière homomorphe la clé homomorphe (53) et la clé quantique chiffrée de manière homomorphe (59), obtenant la clé secrète chiffrée de manière homomorphe (57) ; et
des moyens pour déchiffrer la clé secrète chiffrée de manière homomorphe (57) à l'aide d'une clé privée homomorphe (56) de l'appareil, obtenant ainsi la clé secrète (50).

12. Appareil selon l'une des revendications 9 à 11 dans lequel l'appareil est intégré dans un QKDM.

13. Appareil selon l'une des revendications 9 à 11 dans lequel l'appareil est un appareil différent d'un QKDM.

14. Produit de programme informatique comprenant des instructions/un code de programme informatique pour mettre en œuvre la méthode selon l'une des revendications 1 à 8.

15. Support/mémoire lisible par ordinateur stockant des instructions/un code de programme pour mettre en œuvre la méthode selon l'une des revendications 1 à 8.
